# EUROPÄISCHE PATENTSCHRIFT

(11) **EP 3 059 556 B1**
(45) Veröffentlichungstag und Bekanntmachung des Hinweises auf die Patenterteilung: **29.05.2019**
(21) Anmeldenummer: 16154854.0
(22) Anmeldetag: 09.02.2016
(51) Int. Cl.: G01D 21/00

(54) **FELDGERÄT ZUR BESTIMMUNG EINER MESSGRÖSSE UND VERFAHREN ZUM KOMMUNIZIEREN**
FIELD DEVICE FOR DETERMINING A MEASUREMENT VARIABLE AND METHOD FOR COMMUNICATING
APPAREIL DE TERRAIN DESTINE A DETERMINER UNE GRANDEUR DE MESURE ET PROCEDE DE COMMUNICATION

(30) Priorität: 20.02.2015 DE 102015102486
(43) Veröffentlichungstag der Anmeldung: 24.08.2016
(73) Patentinhaber: Krohne Messtechnik GmbH, 47058 Duisburg (DE)
(72) Erfinder: BIERBAUM, Dirk, 44534 Lünen (DE); HAUT, Ralf, 47807 Krefeld (DE); HANSEN, Christian, 45529 Hattingen (DE)
(74) Vertreter: Gesthuysen Patent- und Rechtsanwälte

(56) Entgegenhaltungen:
- DE-A1- 10 052 836
- DE-A1-102007 026 244

## Beschreibung

Die Erfindung betrifft ein Feldgerät zur Bestimmung mindestens einer Messgröße. Bei der Messgröße handelt es sich beispielsweise um den Volumen- oder Massendurchfluss, um die Dichte, um den Füllstand, die Temperatur, den pH-Wert oder die elektrische Leitfähigkeit eines Mediums in einem Rohr, Behälter oder Gerinne. Weiterhin handelt es sich bei der Erfindung um ein Verfahren zum Kommunizieren des Vorliegens eines Zustands eines Feldgeräts an eine Empfangsvorrichtung.

Als Messgeräte ausgestaltete Feldgeräte werden in der modernen Prozessautomatisierung verwendet, um Medien oder Prozesse zu überwachen oder ausgehend von den ermittelten Messgrößen zu steuern.

Für die Ausgabe der von den Feldgeräten ermittelten Messsignale sind dabei mehrere Standards bekannt. Neben einfachen Signalausgängen, wie 4...20 mA Stromausgang, Puls- oder Frequenzausgängen, werden auch Statusausgänge verwendet, um den Geräte- oder Messwertstatus zu übertragen. Darüber hinaus gibt es komplexere Feldbus-Systeme, wie HART, Fieldbus Foundation oder Profibus.

Über die reine Ermittlung der Messgröße hinaus sind moderne Feldgeräte in der Lage, Fehler festzustellen. Solche Fehler bestehen beispielsweise darin, dass unzulässige Messgrößen auftreten (z. B. zu hohe Temperaturen) oder dass ein Problem im Feldgerät selbst - z. B. bei der Signalverarbeitung oder bei einzelnen Komponenten des Feldgeräts - aufgetreten ist. Eine spezielle Bedeutung erhält diese Möglichkeit der Eigendiagnose bei sicherheitskritischen Anwendungen.

Für die Anwendung der Feldgeräte in besonders gefährlichen und sicherheitskritischen Prozessen werden die Feldgeräte oft nach IEC 61508 oder insbesondere nach der für die Prozessindustrie abgeleiteten IEC 61511 entwickelt. Dabei werden Sicherheits- oder SIL (für Safety Integrity Level)-Funktionen zumindest teilweise in die Feldgeräte übernommen. Der Safety Integrity Level eines Systems ist dabei je höher, desto geringer die Wahrscheinlichkeit ist, dass die bei Bedarf geforderte Sicherheitsfunktion durch das System nicht ausgeführt wird. Die nach den entsprechenden Vorgaben entwickelten Feldgeräte bzw. Komponenten der Feldgeräte werden als sicher bezeichnet bzw. dienen einer Sicherheitsfunktion.

Der Sicherheitsfunktion dient dabei ein sogenannter Sicherheitskreis, der aus den Sensoren, Aktoren, Übertragungselementen, der Logikverarbeitung usw. besteht, die für die Erfüllung der Sicherheitsfunktion entsprechend miteinander verbunden sind.

Beispiele für Sicherheitsfunktionen sind das sichere Abschalten eines Motors, das Schließen eines Ventils oder der sichere Betriebsstopp einer Prozessanlage oder zumindest eines Teils der Anlage, in der ein Fehler erkannt worden ist.

Bei Feldgeräten werden beispielweise bei der Nutzung von Stromausgängen (dies können dabei beispielsweise Zwei- oder auch Vierleitergeräte sein) mit 4...20 mA-Signalen Fehlerzustände signalisiert, indem Stromwerte außerhalb des vorgegebenen Bereichs zwischen 4 mA und 20 mA ausgeben werden.

Tritt beispielsweise ein Fehler auf, durch den ein sicheres Funktionieren des Feldgeräts nicht mehr gewährleistet ist, so wird das Feldgerät in einen sicheren Zustand überführt, was ggf. auch beinhalten kann, dass sich das Feldgerät selbsttätig abschaltet. Weiterhin kann je nach Anwendung auch der Fehlerstrom in einer SIL-Applikation ausgewertet werden und für die Erfüllung der Sicherheitsfunktion die Anlage oder zumindest der mit dem Feldgerät in Verbindung stehende Teile in einen sicheren Zustand überführt werden. Nachteilig an dieser Fehlersignalisierung gemäß dem Stand der Technik ist, dass von dem Feldgerät kein Messwert mehr zur Verfügung steht. Bei manchen Situationen wäre es für die Bewertung bzw. für das Ergreifen von Maßnahmen jedoch vorteilhaft, auch auf diesen Messwert zugreifen zu können.

DE 102007026244 offenbart ein Feldgerät bei welchem nur diejenigen Fehler zur Anzeige gebracht werden, die für die jeweilige Anwendung des Anwenders relevant sind wobei im Fehlerfall neben den Messwerten auch das Fehlersignal ausgegeben werden kann.

DE 10052836 offenbart ein Feldgerät, welches im Fehlerfall sowohl ein Fehlersignal als auch zuvor aufgenommene Messwerte an eine Empfangsvorrichtung ausgeben kann.

Der Erfindung liegt daher die Aufgabe zugrunde, ein Feldgerät bzw. ein Verfahren zur Kommunikation eines Zustands eines Feldgeräts vorzuschlagen, wodurch insbesondere beim Vorliegen eines Fehlerzustands ein Messwert zur Verfügung gestellt und der Zustand sicher kommuniziert wird. Insgesamt soll durch das Feldgerät bzw. durch das Verfahren zur Kommunikation eine Sicherheitsfunktion realisiert werden.

Die Erfindung betrifft eine Vorrichtung nach Anspruch 1 und ein Verfahren nach Anspruch 4.

Die Sicherheitsfunktion besteht insbesondere darin, dass der Zustand des Feldgeräts - oder insbesondere ein Fehlerzustand des Feldgeräts - zuverlässig durch das Zustands- und durch das Messsignal signalisiert wird. Dabei wird durch eine entsprechende Verarbeitung bzw. Verwendung der mit den Zustand- und Messsignalen verbundenen Informationen die Sicherheitsfunktion erfüllt.

So sind in einer Ausgestaltung ein Strom- und ein Service-Ausgang im Feldgerät vorgesehen und beide werden auch beim Vorliegen eines Zustands bzw. insbesondere eines Fehlers zur Ausgabe des Zustands- bzw. des Messsignals verwendet.

Für die Ausgabe von älteren Messwerten verfügt das Feldgerät in einer Ausgestaltung über eine Speichereinheit, in der die Messwerte abgespeichert werden.

In einer Ausgestaltung sind mehrere Zustände des Feldgeräts definiert, denen jeweils ein auszugebendes Zustandssignal zugeordnet ist. Ein Zustand ist dabei in einer Ausgestaltung insbesondere ein Fehlerzustand, so dass das Zustandssignal insbesondere ein Fehlersignal ist. In einer damit verbundenen Ausgestaltung werden unterschiedliche Fehlerzustände nicht generell durch ein Fehlersignal, sondern durch einzelne zugehörige Fehlersignale signalisiert. In einer Ausgestaltung sind unterschiedliche Zustände bzw. unterschiedliche Fehler jeweils einem Zustandssignal zugeordnet.

Beispiele für Fehlertypen sind Hardwarefehler aufgrund von defekter Bauelemente, die dauerhaft zu einem Fehlverhalten des Feldgerätes führen (beispielhaft bezeichnet als Fehlertyp 1). Andere Varianten sind prinzipielle Fehler (z. B. bedingt durch Bauteilalterung oder Temperaturabhängigkeit) oder zufällige Fehler (z. B. Bitflips), die dauerhaft oder auch nur kurzfristig zu einem Messfehler führen (hier für die Verdeutlichung entsprechend bezeichnet als Fehlertyp 2). Durch die Signalisierung der Zustände mit unterschiedlichen Zustandssignalen ist eine differenzierte Reaktion auf der Empfängerseite auf die unterschiedlichen Fehlerzustände des Feldgeräts möglich. So wäre in einer Ausgestaltung beim Vorliegen des Fehlertyps 1 vorgesehen, dass gemäß dem Stand der Technik das Feldgerät in den sicheren Zustand überführt (gemäß IEC 61508) und der Fehlerzustand über den Stromausgang, der die sicherheitsrelevante Messgröße ausgibt, an die Prozessleitstelle signalisiert wird. Bei Fehlertyp 2 würde bei dieser Ausgestaltung weiterhin die Messgröße als Messsignal und zusätzlich über den zweiten Ausgang (Statusausgang) das Fehlersignal bezüglich des Fehlerzustands an die Prozessleitstelle als Empfangsvorrichtung signalisiert werden.

Auf der Seite der Empfangsvorrichtung, die die Signale des Feldgeräts empfängt, ist für die Gewährleistung der Sicherheitsfunktion, der das Feldgerät dient, darauf zu achten, dass die Abhängigkeit vom Zustand, den das Feldgerät erkannt hat und den es durch das Zustandssignal signalisiert, entsprechend bei der Verarbeitung bzw. Anwendung der empfangenen Signale berücksichtigt wird. Indem sich aus dem Zustandssignal eine Aussage über die Art bzw. den Typ des Zustands bzw. ggf. über die Art des Fehlers ergibt, kann dieses Wissen bei der Weiterverarbeitung des Messsignals entsprechend gewürdigt bzw. berücksichtigt werden. Die Realisierung der Sicherheitsfunktion ergibt sich aus dem Zusammenspiel von Feldgerät und der damit verbundenen Empfangsvorrichtung. Die Art der Verarbeitung der Signale des Feldgeräts kann beispielsweise in einem Bedienhandbuch vorgegeben werden.

Wie die Signale ausgegeben werden, ist in den folgenden Ausgestaltungen beschrieben.

In einer Ausgestaltung ist dabei einstellbar, ob über den einen Signalausgang und ggf. abhängig von der Art des Zustands bzw. des Fehlers des Feldgeräts die Zustandssignale alleine oder abwechselnd mit den Messwerten ausgegeben werden. In dieser Ausgestaltung kann also zwischen einer klassischen Signalausgabe und einer alternierenden Signalausgabe umgeschaltet werden. In einer Ausgestaltung geschieht die abwechselnde Ausgabe, indem beide Signale unmittelbar alternierend ausgegeben werden.

In einer weiteren Ausgestaltung wird durch die Art der Abfolge von Zustands- und Messsignal eine ergänzende Information übermittelt, die beispielsweise die Aufmerksamkeit darauf lenkt, dass nicht nur das Messsignal ausgegeben wird.

In einer weiteren bevorzugten Ausgestaltung sind mindestens zwei Signalausgänge vorhanden. Dabei handelt es sich insbesondere um einen ersten Signalausgang und um einen zweiten Signalausgang. Die Ausgabevorrichtung gibt über den ersten Signalausgang das Messsignal und über den zweiten Signalausgang das Zustandssignal aus.

In einer Ausgestaltung ist der erste Signalausgang als Strom-Signalausgang (ggf. als Zwei- oder Vierleiterausgang) ausgestaltet und ist der zweite Signalausgang eine Serviceschnittstelle, die beispielsweise als Ausgabeschnittstelle für digitale Signale ausgestaltet ist. Der Energieversorgung dient damit weiterhin nur der erste Signalausgang und der zweite Signalausgang ist ein ergänzender Ausgang für Signale bzw. Informationen.

In einer Ausgestaltung ist vorgesehen, dass die Ausgabevorrichtung das Messsignal in Form eines 4...20 mA-Signals ausgibt. Der Signalausgang ist daher entsprechend für die Ausgabe von solchen Signalen ausgestaltet. In einer Ausgestaltung ist ein Frequenzausgang vorgesehen. In einer alternativen Ausgestaltung wird das Messsignal über einen Pulsausgang ausgegeben.

In einer Ausgestaltung verfügt das Feldgerät über mindestens eine Eingabeeinheit. Die Eingabeeinheit ist in einer Ausgestaltung eine Form eines Human-Machine-Interface (HMI). In einer alternativen Ausgestaltung handelt es sich um einen der oben genannten Signalausgänge, der ergänzend auch als Signaleingang des Feldgerätes dient. Dabei ist die Eingabeeinheit mit der Ausgabevorrichtung verbunden, so dass über die Eingabeeinheit die Art der Ausgabe von Zustandssignal und/oder Messsignal vorgebbar ist.

Dabei besteht eine Ausgestaltung darin, dass über die Eingabeeinheit nur für eine vorgebbare Gruppe von Zuständen des Feldgeräts die Art der Ausgabe der den Zuständen zugeordneten Zustandssignale veränderbar ist. In dieser Ausgestaltung besteht eine Gruppe von Zuständen - z. B. spezielle Fehlerzustände - des Feldgeräts, deren Ausgabe nicht einstellbar, sondern fest vorgegeben ist. Die Vorgabe erfolgt dabei beispielsweise bei der Fertigung der Feldgeräte oder bei der Erstinstallation.

In einer Ausgestaltung ist vorgesehen, dass die Ausgabevorrichtung für eine vorgebbare Standardgruppe von Zuständen des Feldgeräts in dem Fall, dass ein zu der Standardgruppe gehöriger Zustand auftritt, nur das dem auftretenden Zustand zugeordnete Zustandssignal ausgibt. Es wird also eine Gruppe von besonderen Zuständen des Feldgeräts definiert. Tritt einer dieser Zustände auf, so wird nur das zugehörige Zustandssignal und wird nicht auch das Messsignal ausgegeben (d. h. klassische Ausgabe).

Es ist vorgesehen, dass das durch die Empfangsvorrichtung empfangene Messsignal und das durch die Empfangsvorrichtung empfangene Zustandssignal in Hinblick auf den mit dem Zustandssignal verbundenen Zustand verarbeitet werden. Feldgerät und Empfangsvorrichtung erfüllen dabei eine Sicherheitsfunktion. Die Empfangsvorrichtung ist in einer Ausgestaltung eine Prozessleitwarte und besteht alternativ oder ergänzend aus einer Vielzahl von Einzelkomponenten. Dabei sind in einer Ausgestaltung noch weitere Elemente zwischen dem Feldgerät und der Empfangsvorrichtung angeordnet.

Das Feldgerät und die Empfangsvorrichtung sind Bestandteile eines Sicherheitskreises, der eine Sicherheitsfunktion erfüllt. Tritt ein Zustand auf, so wird dies vom Feldgerät erkannt und über das Zustandssignal an die Empfangsvorrichtung signalisiert, um dort eine entsprechende Reaktion auszulösen. Die Reaktion ist dabei die Umsetzung der Sicherheitsfunktion. Zusätzlich wird vom Feldgerät noch ein Messsignal ausgegeben.

In einer Ausgestaltung des Verfahrens ist vorgesehen, dass eingestellt wird, ob das von dem Feldgerät übermittelte Messsignal einem aktuell oder einem zuvor vom Feldgerät erzeugten Messwert zugeordnet ist. Bei einer solchen Konfigurierung wird in einer Ausgestaltung zudem vorgegeben, bei welchen Zuständen nur das jeweilige Zustandssignal und kein Messsignal ausgegeben wird. In einer Ausgestaltung wird die Konfiguration bezüglich des auszugebenden Messsignals vorzugsweise nach oder während der Installation des Feldgeräts am Prozessort vorgenommen.

Die obigen Ausführungen zum Feldgerät lassen sich insbesondere auch für das Verfahren zur Kommunikation anwenden bzw. ist umgekehrt das Feldgerät so ausgestaltet, dass es die Verfahrensschritte umsetzt.

Die Erfindung bezieht sich daher auch auf ein Verfahren zur Bestimmung einer Messgröße durch ein Feldgerät, wobei mindestens das Feldgerät und eine Empfangsvorrichtung einen Sicherheitskreis bilden und wobei das Feldgerät das Auftreten eines Zustands nach dem vorgenannten Verfahren kommuniziert.

Schließlich bilden Feldgerät und Empfangsvorrichtung ein erfindungsgemäßes System, das eine Sicherheitsfunktion aufweist.

Im Einzelnen gibt es nun eine Vielzahl von Möglichkeiten, das erfindungsgemäße Feldgerät und das erfindungsgemäße Verfahren auszugestalten und weiterzubilden. Dazu wird verwiesen einerseits auf die den Patentansprüchen 1 und 9 nachgeordneten Patentansprüche, andererseits auf die folgende Beschreibung von Ausführungsbeispielen in Verbindung mit der Zeichnung. In der Zeichnung zeigen
- Fig. 1: eine schematische Darstellung eines mit einer Prozessleitwarte verbundenen Feldgeräts und
- Fig. 2: eine schematische Darstellung eines beispielhaften Signals eines Feldgeräts.

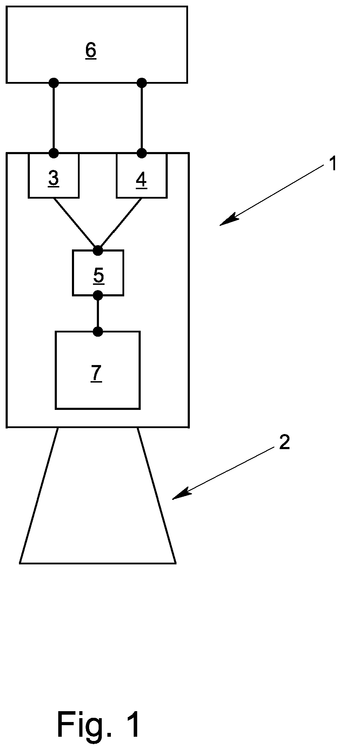

In der Fig. 1 ist schematisch ein Feldgerät 1 dargestellt. Das Feldgerät 1 dient dabei der Bestimmung des Füllstands eines - hier nicht dargestellten - Mediums, wofür eine Sensoreinheit 2 vorgesehen ist. In der gezeigten Ausgestaltung handelt es sich um eine Antenne zum Senden und Empfangen von Mikrowellensignalen. Dabei ist die Erfindung nicht auf die gezeigte Messart beschränkt, sondern kann auch bei anderen Messprinzipien Anwendung finden.

Das Feldgerät 1 verfügt über zwei Signalausgänge: ein erster Signalausgang 3 und ein zweiter Signalausgang 4. Beide Signalausgänge 3, 4 werden von der Ausgabevorrichtung 5 zur Signalausgabe verwendet. Hierbei werden die Messsignale über den ersten Signalausgang 3 und die den ggf. auftretenden Zuständen zugeordneten Zustandssignale über den zweiten Signalausgang 4 ausgegeben.

In der gezeigten Ausführung handelt es sich bei dem ersten Signalausgang 3 um den Stromausgang, der also auch der Energieversorgung des Feldgeräts 1 dient und über den Signale - hier beispielhaft - als 4...20 mA-Signale ausgegeben werden. Der zweite Signalausgang 4 ist eine sogenannte Serviceschnittstelle, die ergänzend zum ersten Signalausgang 3 die Ausgabe von Signalen erlaubt.

Verbunden ist das Feldgerät 1 über die zwei Signalausgänge 3, 4 mit einer Prozessleitwarte 6, die die Ausgangssignale empfängt und entsprechend verarbeitet. Die Prozessleitwarte ist hier ein Beispiel für eine Empfangsvorrichtung. Feldgerät 1 und Prozessleitwarte 6 bilden einen Sicherheitskreis, der eine Sicherheitsfunktion erfüllt. Dabei können jedoch auch weitere - hier nicht dargestellte - Komponenten, Einheiten, Instanzen usw. Teil des Sicherheitskreises sein.

Über den ersten Signalausgang 3 werden die Messsignale ausgegeben. Im normalen Betrieb sind die Messsignale dem Messwert zugeordnet, der durch die Sensoreinheit 2 ermittelt worden ist. Im Normalfall stellt also das Messsignal den aktuell ermittelten Messwert dar.

Tritt ein besonderer Zustand, z. B. ein Fehler im Feldgerät 1 auf, so gibt die Ausgabevorrichtung 5 ergänzend zum Messsignal das dem Zustand zugeordnete Zustandssignal über den zweiten Signalausgang 4 aus.

Das Feldgerät 1 ist also zur Selbstüberwachung ausgestaltet und erkennt beispielweise, dass ein Fehler auftritt. Ein Fehler ist z. B. ein Messwert außerhalb eines vorgegebenen Intervalls oder auch das Auftreten einer Prozessbedingung außerhalb einer vorgegebenen Spezifikation (z. B. eine zu hohe Temperatur, die durch einen entsprechenden Temperatursensor als sekundäre Messgröße ermittelt wird). Alternativ oder ergänzend erlauben manche Feldgeräte auch das Überprüfen von Hardware-Komponenten.

Die Besonderheit liegt nun darin, dass nach dem Erkennen des Zustands bzw. des Fehlers sowohl das Zustands- als auch ein Messsignal und daher zwei Informationen vom Feldgerät 1 ausgegeben werden. Dabei erfüllt das Feldgerät 1 insbesondere eine Sicherheitsfunktion, die sich auch aus der Art der Anwendung bzw. des Prozesses definiert.

Daher können von der Prozessleitwarte 6 gleichzeitig zwei Informationen empfangen werden: die Information über das Vorliegen des Fehlers und die Information über den - zumindest tendenziellen - Messwert.

Je nach Anwendungsfall kann eine Anpassung der Art der Ausgabe der Signale erforderlich werden. So eben auch die Einstellung, ob beim Vorliegen eines Zustands ein aktueller oder ein vorher ermittelter, d. h. alter Messwert als Messsignal ausgegeben werden soll. Dies wird hier über eine Eingabeeinheit 7 ermöglicht, die auf die Ausgabevorrichtung 5 einwirkt und dadurch die Art der Signalausgabe vorgibt.

Das Feldgerät 1 erfüllt die Sicherheitsfunktion, indem es einen Zustand und insbesondere einen Fehler erkennt und diesen als Zustandssignal an die Empfangsvorrichtung 6 übermittelt. Die Information über das Vorliegen eines Zustands wird hierbei erweitert durch die Information über den - aktuellen oder gehaltenen älteren - Messwert. Auf der die Signale empfangenden Empfangsseite, d. h. bei der Empfangsvorrichtung 6 ist dann für die Erfüllung der Sicherheitsfunktion dafür Sorge zu tragen, dass die Signale des Feldgeräts 1 im Sinne der Sicherheitsfunktion angemessen verarbeitet werden.

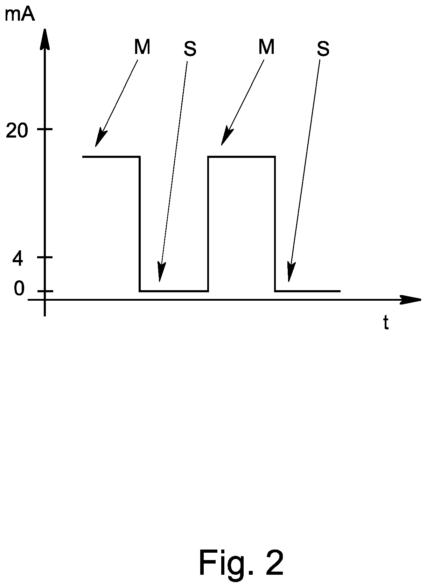

Werden in der in der Fig. 1 dargestellten Ausführung die beiden Signale: Zustands- und Messsignal über zwei separate Signalausgänge ausgegeben, so zeigt die Fig. 2 ein Ausgangssignal, das von einem Signalausgang stammt und in dem sowohl das Mess- M also auch das Zustandssignal S übertragen werden. Dargestellt ist ein Stromsignal in Abhängigkeit von der Zeit t.

Das Messsignal M wird als übliches 4...20 mA-Signal ausgegeben. Daran anschließend wird auf das Zustandssignal S gewechselt, das hier ein 0 mA-Signal, also ein klassisches Fehlersignal ist. Anschließend werden wieder das Messsignal M und das Zustandssignal S ausgegeben. Der Wechsel zwischen den beiden Teilsignalen M und S erzeugt dabei auf der Empfängerseite den Hinweis, dass das Messsignal M mit Bedacht zu verwenden ist.

## Patentansprüche

1. System aus einem Feldgerät (1) und einer Empfangsvorrichtung (6), wobei das Feldgerät (1) zur Bestimmung mindestens einer Messgröße ausgebildet ist, wobei mindestens eine Sensoreinheit (2) zum Erzeugen eines Messwerts vorhanden ist, wobei mindestens ein erster Signalausgang (3) und ein zweiter Signalausgang (4) zur Ausgabe mindestens eines Signals an die Empfangsvorrichtung (6) vorhanden sind, wobei mindestens eine Ausgabevorrichtung (5) vorhanden ist, wobei die Ausgabevorrichtung (5) eingerichtet ist, über den mindestens ersten und/oder zweiten Signalausgang (3, 4) mindestens ein Zustandssignal (S) und ein Messsignal (M) auszugeben, wobei das Zustandssignal (S) einem Zustand des Feldgeräts (1) zugeordnet ist, wobei die Ausgabevorrichtung (5) eingerichtet ist, in dem Fall, dass der Zustand des Feldgeräts (1) auftritt, eine Sicherheitsfunktion zu erfüllen und dabei sowohl das dem Zustand zugeordnete Zustandssignal (S) über den zweiten Signalausgang (4) als auch das Messsignal (M) über den ersten Signalausgang (3) auszugeben, wobei das ausgegebene Messsignal (M) einem vor dem Eintreten des Zustands des Feldgeräts (1) von der Sensoreinheit (2) erzeugten Messwert zugeordnet ist, wobei das Feldgerät (1) und die Empfangsvorrichtung (6) eingerichtet sind, eine Sicherheitsfunktion zu erfüllen, indem die Empfangsvorrichtung (6) das empfangene Zustandssignal (S) und das empfangene Messsignal (M) in Hinblick auf den mit dem Zustandssignal (S) verbundenen Zustand verarbeitet und dass von dem Feldgerät (1) und der Empfangsvorrichtung (6) ein Sicherheitskreis gebildet wird.

2. System aus einem Feldgerät (1) und einer Empfangsvorrichtung (6) nach Anspruch 1, **dadurch gekennzeichnet, dass** der Zustand des Feldgeräts (1) das Vorliegen eines Fehlers - insbesondere im Feldgerät (1) - ist.

3. System aus einem Feldgerät (1) und einer Empfangsvorrichtung (6) nach Anspruch 1 oder 2, **dadurch gekennzeichnet, dass** mindestens eine Eingabeeinheit (7) vorhanden ist, wobei die Eingabeeinheit (7) mit der Ausgabevorrichtung (5) verbunden ist und wobei über die Eingabeeinheit (7) die Art der Ausgabe von Zustandssignal (S) und/oder Messsignal (M) vorgebbar ist.

4. Verfahren zum Kommunizieren des Vorliegens eines Zustands - insbesondere des Vorliegens eines Fehlers - eines Feldgeräts (1) an eine Empfangsvorrichtung (6),
wobei von dem Feldgerät (1) in dem Fall, dass ein Zustand des Feldgeräts (1) auftritt, sowohl ein einem von dem Feldgerät (1) ermittelten Messwert zugeordnetes Messsignal (M) als auch ein dem Zustand zugeordnetes Zustandssignal (S) an die Empfangsvorrichtung (100) übermittelt wird, und wobei durch das Feldgerät (1) und durch die Empfangsvorrichtung (6) eine Sicherheitsfunktion erfüllt wird,
**dadurch gekennzeichnet,**
**dass** durch das Feldgerät (1) und durch die Empfangsvorrichtung (6) die Sicherheitsfunktion erfüllt wird, indem das durch die Empfangsvorrichtung (6) empfangene Messsignal (M) und das durch die Empfangsvorrichtung (6) empfangene Zustandssignal (S) in Hinblick auf den mit dem Zustandssignal (S) verbundenen Zustand verarbeitet werden und dass von dem Feldgerät (1) und der Empfangsvorrichtung (6) ein Sicherheitskreis gebildet wird.

5. Verfahren nach Anspruch 4, **dadurch gekennzeichnet, dass** eingestellt wird, ob das von dem Feldgerät (1) übermittelte Messsignal (M) einem aktuell oder einem zuvor vom Feldgerät (1) erzeugten Messwert zugeordnet ist.

## Claims

1. System comprising a field device (1) and a receiving device (6), wherein the field device (1) is designed for determining at least one measured variable, wherein at least one sensor unit (2) is present for generating a measured value, wherein at least one first signal output (3) and a second signal output (4) are present to issue at least one signal to the receiving device (6), wherein at least one output unit (5) is present, wherein the output unit (5) is designed to issue at least one state signal (S) and one measurement signal (M) via the at least first and/or second signal output (3, 4), wherein the state signal (S) is assigned a state of the field device (1), wherein the output unit (5) is designed, in the case that the state of the field device (1) occurs, to fulfill a safety function and, thereby, to issue both the state signal (S) assigned the state via the second signal output (4) and the measurement signal (M) via the first signal output (3), wherein the output measurement signal (M) is assigned a measurement value generated by the sensor unit (2) before the state of the field device (1) occurs, wherein the field device (1) and the receiving device (6) are designed to perform a security function in that the receiving device (6) processes the received state signal (S) and the received measurement signal (M) with respect to the state associated with the state signal (S), and that a security circuit is formed by the field device (1) and the receiving device (6).

2. System comprising a field device (1) and a receiving device (6) according to claim 1, **characterized in that** the state of the field device (1) is the presence of an error - in particular in the field device (1).

3. System comprising a field device (1) and a receiving device (6) according to claim 1 or 2, **characterized in that** at least one input unit (7) is present, wherein the input unit (7) is connected to the output unit (5) and wherein the type of output of state signal (S) and/or measurement signal (M) can be selected via the input unit (7).

4. Method for communicating the presence of a state - in particular the presence of an error - of a field device (1) to a receiving device (6),
wherein, in the case that a state of the field device (1) occurs, both a measuring signal (M) assigned to a measured value determined by the field device (1) as well as a state signal (S) assigned to the state are transmitted (100) from the field device (1) to the receiving device and wherein a safety function is fulfilled by the field device (1) and by the receiving device (6),
**characterized in**
**that** the safety function is fulfilled by the field device (1) and by the receiving device (6) in that the measurement signal (M) received by the receiving device (6) and the state signal (S) received by the receiving device (6) are processed with regard to the state associated with the state signal (S), and in that a safety circuit is formed by the field device (1) and the receiving device (6).

5. Method according to claim 8 or 9, **characterized in that** a setting is made indicating whether the measuring signal (M) transmitted by the field device (1) is assigned to a current measured value or to a measured value previously generated by the field device (1).

## Revendications

1. Système, constitué d'un appareil de terrain (1) et d'un dispositif récepteur (6), l'appareil de terrain (1) étant conçu pour déterminer au moins une grandeur de mesure, au moins une unité de capteurs (2) étant présente pour générer une valeur de mesure, au moins une première sortie de signaux (3) et une deuxième sortie de signaux (4) étant présentes pour délivrer au moins un signal au dispositif récepteur (6), au moins un dispositif d'émission (5) étant prévu, le dispositif d'émission (5) étant aménagé pour délivrer par l'intermédiaire de l'au moins une première et/ou deuxième sortie de signaux (3, 4) au moins un signal d'état (S) et un signal de mesure (M), le signal d'état (S) étant associé à un état de l'appareil de terrain (1), le dispositif d'émission (5) étant aménagé pour, dans le cas où l'état de l'appareil de terrain (1) intervient, assurer une fonction de sécurité et pour délivrer à cet effet aussi bien le signal d'état (S) associé à l'état par l'intermédiaire de la deuxième sortie de signaux (4) qu'également le signal de mesure (M) par l'intermédiaire de la première sortie de signaux (3), le signal de mesure (M) délivré étant associé à une valeur de mesure générée par l'unité de capteurs (2) avant l'intervention de l'état de l'appareil de terrain (1), l'appareil de terrain (1) et le dispositif récepteur (6) étant aménagés pour assurer une fonction de sécurité en ce que le dispositif récepteur (6) traite le signal d'état (S) réceptionné et le signal de mesure (M) réceptionné, compte tenu de l'état relié au signal d'état (S) et en ce qu'un circuit de sécurité est créé par l'appareil de terrain (1) et le dispositif récepteur (6).

2. Système, constitué d'un appareil de terrain (1) et d'un dispositif récepteur (6) selon la revendication 1, **caractérisé en ce que** l'état de l'appareil de terrain (1) est la présence d'un défaut (notamment dans l'appareil de terrain (1)).

3. Système, constitué d'un appareil de terrain (1) et d'un dispositif récepteur (6) selon la revendication 1 ou 2, **caractérisé en ce qu'**au moins une unité de saisie (7) est présente, l'unité de saisie (7) étant connectée avec le dispositif d'émission (5) et la nature de la délivrance du signal d'état (S) et/ou du signal de mesure (M) étant prédéfinissable par l'intermédiaire de l'unité de saisie (7).

4. Procédé, destiné à communiquer la présence d'un état (notamment la présence d'un défaut) d'un appareil de terrain (1) à un dispositif récepteur (6), dans le cas où un état de l'appareil de terrain (1) intervient, l'appareil de terrain (1) transmettant au dispositif récepteur (100) aussi bien un signal de mesure (M) associé à une valeur de mesure déterminée par l'appareil de terrain (1) qu'également un signal d'état (S) associé à l'état et une fonction de sécurité étant assurée par l'appareil de terrain (1) et par le dispositif récepteur (6),
**caractérisé en ce**
**que** la fonction de sécurité est assurée par l'appareil de terrain (1) et par le dispositif récepteur (6) **en ce que** le signal de mesure (M) réceptionné par le dispositif récepteur (6) et le signal d'état (S) réceptionné par le dispositif récepteur (6) sont traités, compte tenu de l'état relié avec le signal d'état (S) et **en ce qu'**un circuit de sécurité est créé par l'appareil de terrain (1) et le dispositif récepteur (6).

5. Procédé selon la revendication 4, **caractérisé en ce qu'**il est réglé si le signal de mesure (M) transmis par l'appareil de terrain (1) est associé à une valeur de mesure actuellement ou précédemment générée par l'appareil de terrain (1) .
